# EUROPÄISCHE PATENTSCHRIFT

(11) **EP 2 810 337 B1**
(45) Veröffentlichungstag und Bekanntmachung des Hinweises auf die Patenterteilung: **14.09.2016**
(21) Anmeldenummer: 13710374.3
(22) Anmeldetag: 14.03.2013
(51) Int. Cl.: H01M 4/38, H01M 4/52, H01M 4/62, H01M 12/08, H01M 4/02

(54) **SPEICHERSTRUKTUR EINER ELEKTRISCHEN ENERGIESPEICHERZELLE**
STORAGE STRUCTURE OF AN ELECTRICAL ENERGY STORAGE CELL
STRUCTURE D'ACCUMULATEUR POUR UNE CELLULE D'ACCUMULATEUR D'ÉNERGIE ÉLECTRIQUE

(30) Priorität: 16.03.2012 DE 102012204170
(43) Veröffentlichungstag der Anmeldung: 10.12.2014
(73) Patentinhaber: Siemens Aktiengesellschaft, 80333 München (DE)
(72) Erfinder: LANDES, Harald, 90607 Rückersdorf (DE); SCHUH, Carsten, 85598 Baldham (DE); SOLLER, Thomas, 94405 Landau/Isar (DE)
(86) Internationale Anmeldenummer: PCT/EP2013/055187
(87) Internationale Veröffentlichungsnummer: WO 2013/135790

(56) Entgegenhaltungen:
- DE-A1-102012 215 929
- US-A- 4 109 060
- US-A1- 2003 099 882
- KANNAN A M ET AL: "RECHARGEABLE IRON/AIR CELLS EMPLOYING BIFUNCTIONAL OXYGEN ELECTRODES OF OXIDE PYROCHLORES", JOURNAL OF POWER SOURCES, ELSEVIER SA, CH, Bd. 35, Nr. 2, 1. Juli 1991 (1991-07-01), Seiten 113-121, XP000233205, ISSN: 0378-7753, DOI: 10.1016/0378-7753(91)80028-V
- AKISUKE ITO ET AL: "Synthesis of nano-FeO-loaded tubular carbon nanofibers and their application as negative electrodes for Fe/air batteries", JOURNAL OF POWER SOURCES, ELSEVIER SA, CH, Bd. 196, Nr. 19, 16. Mai 2011 (2011-05-16) , Seiten 8154-8159, XP028241182, ISSN: 0378-7753, DOI: 10.1016/J.JPOWSOUR.2011.05.043 [gefunden am 2011-05-27]

## Beschreibung

Speicherstruktur einer elektrischen Energiespeicherzelle Die Erfindung betrifft eine Speicherstruktur einer elektrischen Energiespeicherzelle nach dem Oberbegriff des Patentanspruchs 1.

Überschüssige elektrische Energie, die beispielsweise aus erneuerbaren Energiequellen hervorgeht, lässt sich nur im bedingten Umfang im Stromnetz speichern. Dies gilt auch für überschüssige Energie, die dann bei fossilen Kraftwerken anfällt, wenn diese im optimalen wirtschaftlichen Lastbereich laufen, vom Verbraucher jedoch aus dem Netz nicht abgerufen wird. Für die Zwischenspeicherung dieser überschüssigen Energien in größeren Mengen gibt es verschiedene Großspeichervorrichtungen. Eine davon ist zum Beispiel ein Pumpspeicherkraftwerk. Auf dem Batteriesektor besteht ein Ansatz für einen elektrischen Energiespeicher darin, sogenannte Rechargeable Oxide Batteries (ROB) also Hochtemperatur-Metall-Luftbatterien einzusetzen. Bei diesen Batterien wird ein metallbasiertes Speichermedium je nach Batteriezustand (Laden oder Entladen) reduziert oder oxidiert. Bei einer Vielzahl dieser zyklischen Lade- und Entlad- also Oxidations- und Reduktionsvorgängen des Speichermediums neigt dieses Medium bei den anliegenden vergleichsweise hohen Betriebstemperaturen einer solchen Batterie, die üblicherweise zwischen 600°C und 800°C liegen, dazu, dass die geforderte Mikrostruktur insbesondere die Porenstruktur des Speichermediums durch Sinterprozesse zerstört wird. Dies führt zu einer Alterung und anschließend zu einem Versagen der Batterie.

Elektrische Metall-Luft-Speicherstrukturen sind unter anderem aus den Druckschriften US 2003/0099882 A1 und US 4,109,060 bekannt. Darin werden insbesondere typische Partikelgrößenverteilungen der aktiven Speichermaterialien offenbart.

Die Aufgabe der Erfindung besteht darin, eine Speicherzelle eines elektrischen Energiespeichers bereitzustellen, die gegenüber dem Stand der Technik eine höhere Langzeitbeständigkeit aufweist und einer höheren Zyklenzahl von Lade- und Entladevorgängen stand hält.

Die Lösung der Aufgabe besteht in einer Speicherstruktur mit den Merkmalen des Patentanspruchs 1.

Die erfindungsgemäße Speicherstruktur einer elektrischen Energiespeicherzelle umfasst ein aktives Speichermaterial und zeichnet sich dadurch aus, dass das aktive Speichermaterial eine Partikelgrößenverteilung aufweist, die einen d₅-Wert von mindestens 0,2 µm aufweist, wobei ein d₅₀-Wert der Partikelgrößenverteilung zwischen 0,3 µm und 1,5 µm liegt. Ferner zeichnet sich die Speicherstruktur dadurch aus, dass ein d₉₅-Wert der Partikelgrößenverteilung kleiner als 5 µm ist. Hierbei wird unter dem Begriff d₅₀-Wert verstanden, dass 50% aller Partikel kleiner sind als der angegebene Wert. Analog bedeutet der d₅-Wert, dass 5% der Partikel kleiner sind als die angegebenen 0,2 µm und der d₉₅-Wert bedeutet, dass 95% aller Partikel kleiner sind als der angegebene Wert von 5 µm.

Bei der genannten Partikelgrößenverteilung handelt es sich hierbei um die Partikelgrößenverteilung der Ausgangsstoffe des aktiven Speichermaterials für die Speicherstruktur. In der fertig gestellten Speicherstruktur liegen die einzelnen Körner des aktiven Speichermaterials in gepresster bzw. vorgesinterter Form vor, so dass es mikroskopisch zu Akklomeraten kommt bzw. zu stoffschlüssigen Verbindungen in Kontaktbereichen, die auch als Sinterhälse bezeichnet werden. Die einzelnen Körner können somit durch eine Temperaturbehandlung an den Kontaktbereichen durch Diffusionsvorgänge verschmelzen was dazu führt, dass sie als ein größeres Korn mikroskopisch sichtbar werden. Daher wird zur stofflichen Charakterisierung des aktiven Speichermaterials die Partikelgrößenverteilung des Ausgangsmaterials verwendet, wobei sich diese Partikelgrößenverteilung, wenn auch mit stoffschlüssigen Kontaktflächen in der Mikrostruktur des fertig gestellten Speichermaterials bzw. der fertig gestellten Speicherstruktur widerspiegelt.

Es handelt sich hierbei in beiden beanspruchten Ausgestaltungsformen jeweils um eine vergleichsweise enge Partikelgrößenverteilung, wobei der d₅₀-Wert mit einer Größenordnung, die um etwas 1 µm also zwischen 0,8 µm und 1,1 µm liegt, einen Bereich darstellt, der klein genug ist, so dass die Partikel eine möglichst große Oberfläche bezogen auf ihr Volumen haben, was wiederum dazu führt, dass ihre Reaktivität mit einem noch zu erläuternden Reaktanden ausreichend groß ist. Andererseits ist dieser D₅₀-Wert so groß gewählt, dass nicht zwangsläufig eine sofortige Versinterung erfolgt, wenn die Speicherstruktur bei Prozesstemperaturen der Energiespeicherzelle, die zwischen 600°C und 800°C liegen, betrieben wird. Dies würde bei einer Partikelgrößenverteilung auftreten, wenn ein d₅₀-Wert in Nähe des Nanometerbereichs liegen würde. Es hat sich somit erfindungsgemäß herausgestellt, dass gerade ein d₅₀-Wert um den Bereich von 1 µm herum besonders vorteilhaft ist, hinzu kommt, dass die gesamte Partikelgrößenverteilung sehr eng sein muss, weshalb auch der d₅-Wert nicht kleiner als 0,2 µm betragen darf. Das bedeutet, dass 90% der verwendeten Körner des aktiven Speichermaterials größer als 0,2 µm jedoch auch kleiner als 5 µm sind.

Eine derart enge Verteilungsstruktur der Partikel des aktiven Speichermaterials mit dem angegebenen d₅₀-Wert, führt also dazu, dass die Partikel groß genug sind, dass sie nicht zu einer erhöhten Sinterneigung neigen, wie das Nanopartikel.tun, andererseits ist der mittlere Wert der Partikel so klein, dass die aktive Oberfläche der einzelnen Körner des aktiven Speichermaterials so groß ist, dass die entsprechenden chemischen Prozesse, insbesondere Redoxprozesse, sehr schnell ablaufen, was die Zykluszeiten der Energiespeicherzelle in vorteilhafter Weise verkürzt und die Leistungsfähigkeit der Speicherzelle erhöht. Weiterhin können etwaige negative Effekte, die durch Rohstoff- bzw. Prozessverunreinigung hervorgerufen werden würden, durch die hohe aktive Oberfläche der Körner des aktiven Speichermaterials minimiert werden.

Zur noch besseren Stabilisierung der Speicherstruktur gegen ein Versintern bei mehreren Zyklen eines chemischen Prozesses in der Speicherzelle, insbesondere des Redoxprozesses, ist es zweckmäßig, ein inertes Material in verteilter Form in die Rohstoffe des aktiven Speichermaterials mit hinein zu bringen, wobei dieses inerte Material in der Speicherstruktur in fein verteilter Form zwischen den Körnern des aktiven Speichermaterials vorliegt. Ein derartiges inertes Material weist dabei ebenfalls eine maximale Korngröße von 10µm, insbesondere von 3 µm auf. Ein derartiges intertes Material wirkt als Stützstruktur die zusätzlich die Versinterungsneigung des Speichermaterials weiter reduziert. Der Volumenanteil des inerten Materials am Speichermaterial beträgt hierbei in vorteilhafter Weise weniger als 50%, insbesondere zwischen 5% und 15%.

Hierbei wird unter dem Begriff inert verstanden, dass sich ein chemisches Gleichgewicht zwischen dem inerten Material und einem möglichen Reaktanden so langsam einstellt, so dass es bei den vorherrschenden Betriebstemperaturen zu keinen Reaktionen kommt, die die Funktionalität der Speicherstruktur nachhaltig beeinflussen. Darunter wird insbesondere ein inertes Verhalten gegenüber einem gasförmigen oder flüssigen Reaktanden verstanden, der wiederum eine Reaktion mit dem Speichermaterial eingeht. Außerdem wird hierunter ein inertes Verhalten gegenüber dem Speichermaterial an sich verstanden. Insbesondere kommt als inertes Speichermaterial Zirkonoxid, Calciumoxid, Magnesiumoxid oder Aluminiumoxid zum Einsatz.

Eine offene Porosität der Speicherstruktur, also das Leervolumen zwischen den Körnern des aktiven Speichermaterials und ggf. des inerten Materials beträgt zwischen 15% und 30 Vol.%.

Eine offene Porosität in dieser Größenordnung ist einerseits klein genug, so dass möglichst viel aktives Speichermaterial pro Volumeneinheit untergebracht werden kann, andererseits ist sie groß genug, dass ein gasförmiger Reaktand mit genügend hoher Geschwindigkeit zum aktiven Speichermaterial transportiert werden kann.

Die Form der Körner des aktiven Speichermaterials ist in vorteilhafter Weise asphärisch gestaltet. Hierbei können die Körner bevorzugt in oblater, prolater, plättchenförmiger, nadelförmiger oder röhrenförmiger Form vorliegen, weil durch eine derartige asphärische also nicht kugelhafte Partikelmorphologie das Oberflächen- zu Volumenverhältnis der Partikel vergrößert wird.

In einer bevorzugten Ausgestaltungsform der Erfindung liegt das aktive Speichermaterial in Form von Eisenoxid vor. Das Eisenoxid liegt üblicherweise bei einer Herstellung der Speicherstruktur in Form von Fe₂O₃ (Eisen (III)-oxid)vor, während des Betriebs der Speicherzelle ändern sich in der Regel die Oxidationsstufen des Eisens, weshalb der Betrieb der Speicherzelle mit den Verbindungen FeO (Eisen (II)-oxid) und/oder Fe₃O₄ (Eisen (II, III)-oxid) stattfindet. Das aktive Speichermaterial liegt insbesondere in Form eines Redoxpaares vor, das aus Eisen und Eisenoxid besteht, wobei der Anteil der jeweiligen Komponenten abhängig vom Ladezustand der elektrischen Speicherzelle ist.

Weitere Merkmale der Erfindung und weitere Vorteile werden anhand der folgenden Figuren näher erläutert. Bei der Figurenbeschreibung handelt es sich um beispielhafte Ausgestaltungsformen der Erfindung, die keine Einschränkung des Schutzbereiches darstellen.

Dabei zeigen:
Figur 1 eine schematische Darstellung der Wirkungsweise einer elektrischen Speicherzelle,
Figur 2 eine schematische Darstellung der Mikrostruktur der Speicherstruktur in gepressten Zustand,
Figur 3 die Mikrostruktur nach Figur 2 nach einer Temperaturbehandlung mit Sinterhalsbindung so wie ein vergrößerter Ausschnitt daraus und
Figur 4 zwei Beispiele für eine Partikelgrößenverteilung.

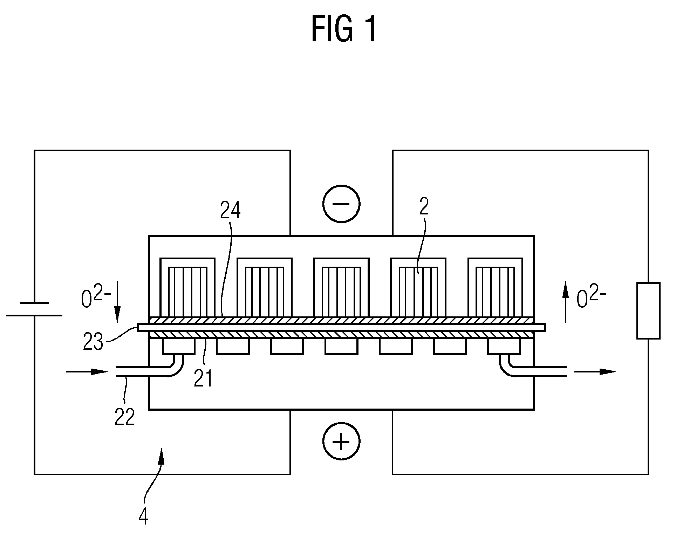

Anhand von Figur 1 soll zunächst schematisch die Wirkungsweise einer Rechargeable Oxide Batterie (ROB) beschrieben werden, insoweit dies für die vorliegende Beschreibung der Erfindung notwendig ist. Ein üblicher Aufbau einer ROB besteht darin, dass an einer positiven Elektrode 21, die auch als Luftelektrode bezeichnet wird, ein Prozessgas, insbesondere Luft, über eine Gaszufuhr 22 eingeblasen wird, wobei aus der Luft Sauerstoff entzogen wird. Der Sauerstoff gelangt in Form von Sauerstoffionen O²⁻ durch einen an der positiven Elektrode anliegenden Feststoffelektrolyten 23, zu einer negativen Elektrode 24, die auch als Speicherelektrode bezeichnet wird. Würde nun an der negativen Elektrode 24 also an der Speicherelektrode eine dichte Schicht des aktiven Speichermaterials vorliegen, so würde die Ladekapazität der Batterie schnell erschöpft werden.

Aus diesem Grund ist es zweckmäßig, an der negativen Elektrode als Energiespeichermedium eine Speicherstruktur 2 aus porösem Material einzusetzen, das ein funktional wirkendes oxidierbares Material als ein aktives Speichermaterial 6, bevorzugt in Form von Eisen und Eisenoxid enthält.

Über ein, bei Betriebszustand der Batterie gasförmiges Redoxpaar, beispielsweise H₂/H₂O, werden die, durch den Festkörperelektrolyten 23 transportierten Sauerstoffionen durch Porenkanäle der porösen Speicherstruktur 2, die das aktive Speichermaterial 6 umfasst, transportiert. Je nachdem ob ein Lade- oder Entladevorgang vorliegt, wird das Metall bzw. das Metalloxid (Eisen/Eisenoxid) oxidiert oder reduziert und der hierfür benötigte Sauerstoff durch das gasförmige Redoxpaar H₂/H₂O angeliefert oder zum Festkörperelektrolyten zurück transportiert. Dieser Mechanismus wird als Shuttlemechanismus bezeichnet.

Der Vorteil des Eisens als oxidierbares Material, also als aktives Speichermaterial 6, besteht darin, dass es bei seinem Oxidationsprozess in etwa dieselbe Ruhespannung von etwa 1 V aufweist, wie das Redoxpaar H₂/H₂O.

Insbesondere die Diffusion der Sauerstoffionen durch den Feststoffelektrolyten 23 benötigt eine hohe Betriebstemperatur von 600 bis 800°C der beschriebenen ROB. Hierbei ist nicht nur die Struktur der Elektroden 21 und 24 und des Elektrolyten 23 einer hohen thermischen Belastung ausgesetzt, sondern auch die Speicherstruktur 2, die das aktive Speichermaterial 6 umfasst. Bei den stetigen Zyklen von Oxidation und Reduktion neigt das aktive Speichermaterial dazu, zu versintern, das bedeutet, dass die einzelnen Körner immer mehr miteinander durch Diffusionsprozesse verschmelzen, bis die reaktive Oberfläche sehr klein wird und die Porenstruktur geschlossen ist. Bei einer geschlossenen Porenstruktur kann das Redoxpaar H₂/H₂O die aktive Oberfläche des aktiven Speichermaterials 6 nicht mehr erreichen, so dass die Kapazität der Batterie sehr schnell erschöpft ist.

Ein Vorteil der ROB besteht darin, dass sie durch ihre kleinste Einheit, nämlich der Speicherzelle modular nahezu unbegrenzt erweiterbar ist. Somit ist eine kleine Batterie für den stationären Hausgebrauch ebenso darstellbar wie eine großtechnische Anlage zur Speicherung der Energie eines Kraftwerkes.

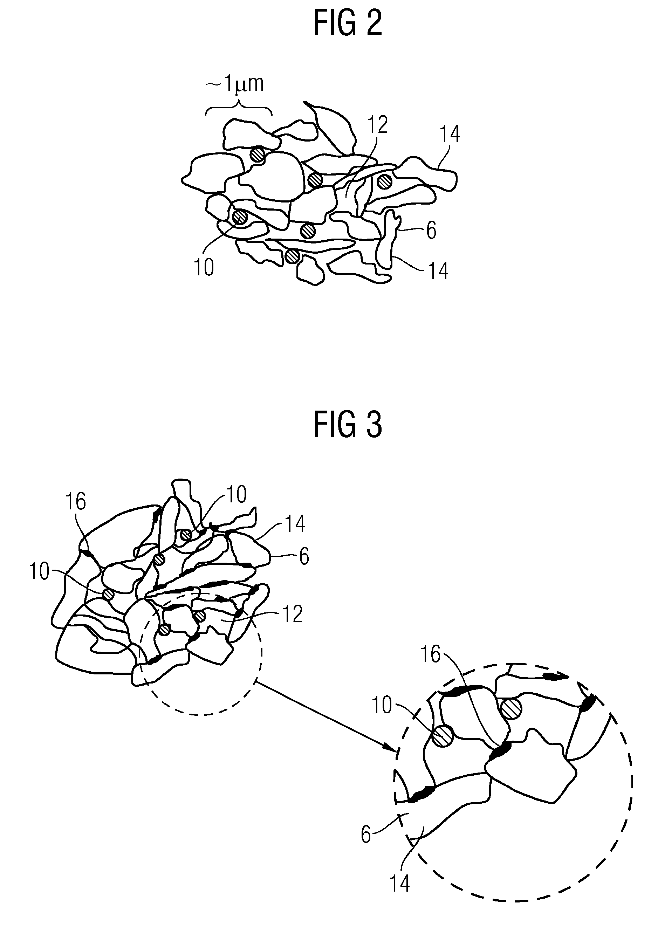

In den Figuren 2 und 3 sind schematisch beispielhafte Mikrostrukturen der Speicherstruktur dargestellt. In Figur 2 liegen blättchenförmige Körner 14 eines aktiven Speichermaterials 6 in gepresster Form vor. Eine derartige Speicherstruktur kann beispielsweise durch ein uniaxiales Pressverfahren kostengünstig hergestellt werden. Grundsätzlich sind jedoch andere Formgebungsverfahren beispielsweise isostatisches Pressen, heißisostatisches Pressen, Schlickerguss, Sedimentationsverfahren, Folienziehen und Laminationsverfahren so wie Siebdruck oder elektrophorätische Abscheidung bzw. Extrusion ebenfalls zweckmäßig. Die Körner 14 des aktiven Speichermaterials 6 in Figur 2 liegen lediglich in gepresster Form vor, hierbei werden die einzelnen Körner 14 durch mechanische Verklammerungen zusammengehalten.

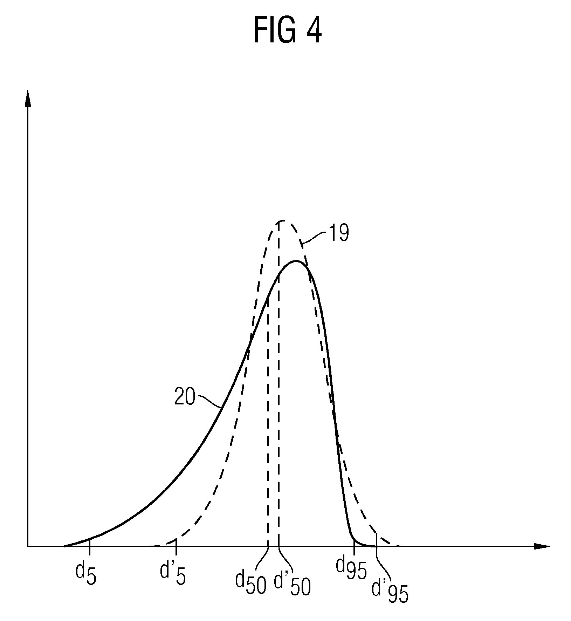

Eine Partikelgrößenverteilung 19, 20 (vgl. Figur 4) der Körner 14 des aktiven Speichermaterials 6 ist dabei so ausgestaltet, dass die Hälfte der Körner (Partikel) einen Durchmesser von weniger als 1 µm aufweisen. Der D₅₀-Wert der Verteilungskurve 19, 20 also der sogenannte D₅₀-Wert liegt damit bei 1 µm. Dies ist rein schematisch durch den Maßstab von 1 µm im oberen Bereich der Figur 2 außerhalb der Mikrostruktur angedeutet. Die Partikelgrößenverteilung ist dabei möglichst eng gewählt, so dass alle oder bzw. ein Großteil der Körner eine möglichst gleiche Korngröße aufweisen. Dies wird dadurch manifestiert, dass die Korngrößenverteilung so ausgestaltet ist, dass lediglich 5% der Körner kleiner als 200 µm sind. Der D₅-Wert liegt somit also bei 200 µm.

Zudem sollten die Körner nicht zu groß sein, bevorzugt sollten nicht mehr als 5% der Partikel größer als 3 µm sein. Partikel in der Größenordnung um 1 µm herum weisen für die Anwendung als aktives Speichermaterial 6 den besonderen Vorteil auf, dass sie ein ausreichend großes Oberflächen- zu Volumenverhältnis haben, das eine gute Reaktion mit dem Reaktanden H₂/H₂O gewährleistet. Das Oberfläche-zu-Volumen-Verhältnis wäre natürlich bei Partikeln im Nanometerbereich noch besser, diese würden jedoch sofort miteinander zu großen Körnern versintern, was wiederum die Gasdurchlässigkeit nachhaltig beeinflussen bzw. ganz unterbinden würde und im Weiteren zum Abbruch der Reaktivität des aktiven Speichermaterials mit dem Reaktanden aus dem Redoxpaar H₂/H₂O führen würde. Die Betriebsfähigkeit der Speicherzelle 4 würde somit unterbrochen werden.

In der Speicherstruktur nach Figur 2 sind zur weiteren Reduktion der Versinterungsneigung inerte Partikel 10 eingebracht, die möglichst fein verteilt vorliegen und die beispielsweise aus einem oxidischen Material wie Zirkonoxid, Aluminiumoxid, Calciumoxid, Magnesiumoxid oder ähnlichem bestehen. Dieses inerte Material ist insbesondere inert gegenüber dem Eisenoxid bzw. Eisen und gegenüber dem Reaktanden H₂/H₂O. Der Anteil des inerten Materials beträgt in diesem Beispiel 10% am Volumen der gesamten Speicherstruktur. Die inerten Stützpartikel 10 stützen die gesamte Struktur bei den Betriebstemperaturen von etwas 700°C.

In Figur 3 ist eine alternative Speicherstruktur 2 dargestellt, die einer Temperaturbehandlung unterzogen wurde, wobei sich zwischen den einzelnen Körnern 14 des aktiven Speichermaterials 6 durch Diffusionsprozesse Sinterhälse 16 ausgebildet haben. Es liegt somit zwischen den einzelnen Körnern 14 nunmehr eine stoffschlüssige Verbindung vor. Diese stoffschlüssige Verbindung in Form von Sinterhälsen 16 dient einer zusätzlichen Stabilisierung der Speicherstruktur 2, sie ist jedoch noch so gering ausgeprägt, dass die einzelnen Körner 14 nicht vollständig miteinander verschmolzen sind, sondern ihre ursprüngliche Kornstruktur im Wesentlichen beibehalten haben. Ein derartiges Ansintern ist aber zweckmäßig, um die mechanische und thermische Stabilität der Speicherstruktur 2 noch zu erhöhen. In dem vergrößerten Ausschnitt des gestrichelt eingezeichneten Kreis in Figur 3 sind die Sinterhälse 16 sowie die inerten Partikel 10 noch einmal besser sichtbar dargestellt, es ist ferner sichtbar, dass die einzelnen Partikel 14 ihre ursprüngliche Gesamtstruktur beibehalten haben.

In Figur 4 sind schematisch zwei häufig auftretende Partikelverteilungskurven dargestellt. An der x-Achse ist dabei der jeweilige Partikeldurchmesser angegeben, die y-Achse zeigt die relative Häufigkeit der Partikel, sie ist rein schematisch dargestellt und somit nicht mit Zahlenwerten versehen. In gestrichelter Form ist hierbei eine typische Gaußverteilung 19 angegeben, wobei es sich hierbei um eine symmetrische Häufigkeitsverteilung handelt. Für die Anwendung der beschriebenen Speicherstruktur 2 kann jedoch eine asymmetrische Korngrößenverteilung bzw. Partikelgrößenverteilung nach der Theorie von Lifshitz-Slyozov-Wagner (LSW) zweckmäßig sein. Die sogenannte LSW-Verteilung resultiert in der Praxis auch daraus, da es bei der Partikelreaktion untereinander zu einer Oswald-Reifung kommt, so dass die vorhandenen Partikel nach mehreren Temperaturbehandlungszyklen zu einer Partikelvergröberung auf Kosten kleinerer Partikel neigen. Die LSW-Verteilung 20 wirkt diesem Effekt entgegen.

## Patentansprüche

1. Speicherstruktur einer elektrischen Metall-Luft-Energiespeicherzelle (4) umfassend ein aktives Speichermaterial (6), **dadurch gekennzeichnet, dass** das aktive Speichermaterial (6) eine Partikelgrößenverteilung (19, 20) aufweist, die einen d₅-Wert von mindestens 0,2 µm aufweist und ein d₅₀-Wert zwischen 0,3 µm und 1,5 µm liegt, wobei ein d₉₅-Wert der Partikelgrößenverteilung kleiner als 5 µm ist.

2. Speicherstruktur nach Anspruch 1, **dadurch gekennzeichnet, dass** im aktiven Speichermaterial (6) ein inertes Material (10) in verteilter Form vorliegt, dass eine maximale Korngröße von 10 µm aufweist, insbesondere von weniger als 3 µm aufweist.

3. Speicherstruktur nach einem der vorhergehenden Ansprüche, **dadurch gekennzeichnet, dass** die Speicherstruktur eine offene Porosität zwischen 15 % und 30 % aufweist.

4. Speicherstruktur nach einem der vorhergehenden Ansprüche, **dadurch gekennzeichnet, dass** der Volumenanteil des inerten Materials (10) am Gesamtvolumen des Speichermaterials inklusive Inertmaterial und Hohlräume zwischen 5 % und 15 % liegt jedoch insbesondere unter 50% bleibt.

5. Speicherstruktur nach einem der vorhergehenden Ansprüchen, **dadurch gekennzeichnet, dass** Körner (14) des aktiven Speichermaterials (6) eine asphärische Form aufweisen.

6. Speicherstruktur nach einem der vorhergehenden Ansprüche, **dadurch gekennzeichnet, dass** das aktive Speichermaterial (6) bei der Herstellung der Speicherkörper in Form von Eisenoxid vorliegt.

7. Speicherstruktur nach Anspruch 6, **dadurch gekennzeichnet, dass** das aktive Speichermaterial (6) in Form eines Redoxpaares, das Eisen und Eisenoxid enthält, vorliegt.

## Claims

1. Store structure of an electrical metal/air energy storage cell (4) comprising an active storage material (6), **characterized in that** the active storage material (6) has a particle size distribution (19, 20) having a d₅ of at least 0.2 µm and a d₅₀ between 0.3 µm and 1.5 µm, with a d₉₅ of the particle size distribution less than 5 µm.

2. Store structure according to Claim 1, **characterized in that** an inert material (10) present in distributed form in the active storage material (6) has a maximum grain size of 10 µm, especially of less than 3 µm.

3. Store structure according to either of the preceding claims, **characterized in that** the storage structure has an open porosity between 15% and 30%.

4. Store structure according to any of the preceding claims, **characterized in that** the proportion by volume of the inert material (10) in the total volume of the storage material including the inert material and cavities is between 5% and 15%, but especially remains below 50%.

5. Store structure according to any of the preceding claims, **characterized in that** grains (14) of the active storage material (6) have an aspherical form.

6. Store structure according to any of the preceding claims, **characterized in that** the active storage material (6) is in the form of iron oxide in the course of production of the storage bodies.

7. Store structure according to Claim 6, **characterized in that** the active storage material (6) is in the form of a redox pair comprising iron and iron oxide.

## Revendications

1. Structure d'accumulateur d'une cellule (4) d'accumulateur d'énergie électrique métal-air comprenant une matière (6) active d'accumulateur, **caractérisée en ce que** la matière (6) active d'accumulateur a une répartition (19, 20) de dimension de particules, qui a une valeur d₅ d'au moins 0,2 µm et une valeur d₅₀ comprise entre 0,3 µm et 1,5 µm, une valeur d₉₅ de la répartition de dimension de particules étant plus petite que 5 µm.

2. Structure d'accumulateur suivant la revendication 1, **caractérisée en ce qu'**il y a, à l'état réparti dans la matière (6) active d'accumulateur, une matière (10) inerte ayant une granulométrie maximum de 10 µm, notamment de moins de 3 µm.

3. Structure d'accumulateur suivant l'une des revendications précédentes, **caractérisée en ce que** la structure d'accumulateur a une porosité ouverte comprise entre 15 % et 30 %.

4. Structure d'accumulateur suivant l'une des revendications précédentes, **caractérisée en ce que** la proportion en volume de la matière (10) inerte, par rapport au volume total de la matière de l'accumulateur, y compris la matière inerte et les cavités, est comprise entre 5 % et 15 %, en restant toutefois notamment inférieure à 50 %.

5. Structure d'accumulateur suivant l'une des revendications précédentes, **caractérisée en ce que** des grains (14) de la matière (6) active d'accumulateur ont une forme asphérique.

6. Structure d'accumulateur suivant l'une des revendications précédentes, **caractérisée en ce que** la matière (6) active de l'accumulateur se présente à la fabrication du corps de l'accumulateur sous la forme d'oxyde de fer.

7. Structure d'accumulateur suivant la revendication 6, **caractérisée en ce que** la matière (6) active de l'accumulateur se présente sous la forme d'une paire rédox, qui contient du fer et de l'oxyde de fer.
